# FASCICULE DE BREVET EUROPEEN

(11) **EP 3 419 406 B1**
(45) Date de publication et mention de la délivrance du brevet: **01.07.2020**
(21) Numéro de dépôt: 17710342.1
(22) Date de dépôt: 22.02.2017
(51) Int. Cl.: A01B 63/26, A01C 7/20

(54) **ÉLÉMENT TRAVAILLANT D'UNE MACHINE AGRICOLE À SYSTEME DE RÉGLAGE DE LA FORCE DE TERRAGE**
ARBEITSELEMENT EINER LANDWIRTSCHAFTLICHEN MASCHINE MIT EINEM SYSTEM ZUR ANPASSUNG DES ANPRESSDRUCKS
WORKING ELEMENT OF AN AGRICULTURAL MACHINE HAVING A SYSTEM FOR ADJUSTING THE DOWN-PRESSURE

(30) Priorité: 26.02.2016 FR 1651595
(43) Date de publication de la demande: 02.01.2019
(73) Titulaire: Kuhn S.A., 67700 Saverne (FR)
(72) Inventeur: ANDRES, Christophe, 67700 Waldolwisheim (FR)
(74) Mandataire: Esch, Esther Evelyne
(86) Numéro de dépôt international: PCT/FR2017/050390
(87) Numéro de publication internationale: WO 2017/144815

(56) Documents cités:
- EP-A1- 1 483 952
- EP-A1- 2 823 701
- US-A- 4 766 962
- US-A1- 2007 039 746

## Description

La présente invention se rapporte au domaine technique général du machinisme agricole et en particulier au domaine du travail du sol et/ou du semis.

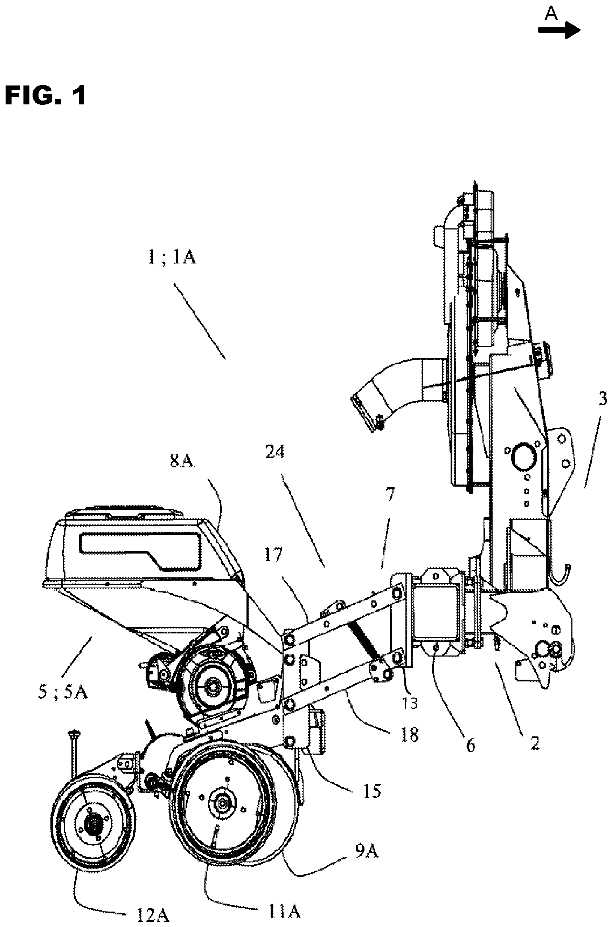

L'invention concerne toute machine agricole nécessitant l'application d'une force de terrage. Une force de terrage est un effort de lestage appliqué à un outil en direction du sol pour favoriser l'interaction entre l'outil et le sol. L'invention concerne par exemple une machine agricole 1 telle qu'en figure 1, qui peut être un semoir monograine ou semoir de précision 1A, ou encore une machine de distribution d'engrais ou une machine mixte. Ce semoir comporte un châssis 2 transversal à la direction d'avance, lequel porte au moins un élément travaillant 5. L'élément travaillant 5 est nommé ici élément semeur 5A, étant entendu qu'il pourrait aussi bien s'agir d'un élément de distribution d'engrais, d'un élément mixte de distribution de graines et d'engrais ou d'un outil de travail du sol. L'élément semeur 5A présente une structure de liaison 7 au moyen de laquelle il est monté sur une poutre 6 du châssis 2. La structure de liaison 7 comporte au moins un bras supérieur 17 et d'un bras inférieur 18. La structure de liaison 7 comporte également une pince 13 et une fixation 15 permettant chacune la liaison de chacun des deux bras 17 et 18 à la fois avec la poutre 6 et l'élément semeur 5A.

L'élément semeur 5A a pour rôle de former le sillon et d'y acheminer les graines depuis une trémie 8A. Afin d'assurer une bonne germination des graines, chaque espèce exige d'être placée à une profondeur appropriée. A cet effet, la structure de liaison 7 est pourvue d'un système de réglage de la force de terrage 24 permettant d'appliquer une force vers le bas sur l'élément semeur 5A pour maintenir une profondeur d'implantation des graines constante. Des disques ouvreurs 9A sont prévus pour ouvrir le sillon, suivis de roues de jauge 11A latérales pour contrôler la profondeur de semis, c'est-à-dire empêcher un enfoncement trop profond de l'élément semeur. Enfin, des roues de rappui 12A viennent refermer le sillon et renforcer le contact entre les graines et le sol.

Un tel système de réglage est par exemple connu du document EP1483952A1. Dans ce document, le système de réglage comporte une poignée de réglage montée sur ressorts. La poignée de réglage comporte trois tiges et trois plaques assemblées entre elles et formant un tout. Les trois tiges sont montées parallèles entre elles et sont chacune fixées aux trois plaques et perpendiculaires à celles-ci. Les tiges forment à proprement parler la partie préhensible de la poignée.

En référence à la figure 5 du document EP1483952A1, une première tige repose sur la paire de bras supérieurs et sert d'axe de rotation à la poignée. Les deuxième et troisième tiges sont disposées en arrière de la première par rapport à la direction d'avance de la machine. La deuxième tige s'engage dans les crans de la crémaillère pour bloquer la poignée en position et imposer une force de terrage donnée à l'élément semeur, c'est-à-dire également la profondeur d'engagement dans le sol. La troisième tige offre essentiellement une prise à l'utilisateur pour le basculement de la poignée. Un dispositif de verrouillage est prévu pour maintenir la poignée en position dans la crémaillère. Enfin, les ressorts sont montés à rotation sur un axe lié à la paire de bras inférieurs.

Dans ce système, la longueur des ressorts est déterminée lorsque la machine est levée, que l'élément travaillant est en position basse et donc que les bras supérieurs sont au plus près des bras inférieurs, c'est-à-dire lorsque la poignée est engagée dans le cran de la crémaillère le plus en arrière et que l'élément semeur est en position basse. La force de terrage appliquée à l'élément semeur est alors maximale. En rapprochant la poignée de l'avant de la machine, il est possible de diminuer l'effort de terrage appliqué. Ce système de réglage présente toutefois une force de terrage relativement faible en position avancée ce qui impose de verrouiller la poignée contre la crémaillère par une goupille faute de quoi le système risque de se désengager.

Un autre système connu de réglage de la force de terrage présente un coulisseau pouvant glisser sur les bras supérieurs et sur lequel sont montés des ressorts liés aux bras inférieurs. Le coulisseau présente des pions latéraux que l'on vient enclencher au besoin dans des logements prévus dans les bras supérieurs. Les ressorts s'opposent fortement au déplacement du coulisseau contre les bras supérieurs et le réglage s'en trouve fastidieux.

Un troisième système connu présente une poignée non basculable, directement montée sur des ressorts de terrage. Le réglage se fait ici en tirant la poignée dans l'axe des ressorts pour désengager la position de travail. Ce système offre une force de terrage limitée car l'utilisateur doit pouvoir directement compenser cette force au réglage.

En outre, les machines agricoles du type décrit ci-dessus présentent un grand nombre d'éléments travaillants disposés les uns à côté des autres. L'accès aux éléments travaillants est exigu et complique le réglage pour l'utilisateur.

La présente invention a pour but de remédier aux inconvénients précités. Elle doit notamment proposer un élément travaillant amélioré pour machine agricole, ayant un système de réglage de force de terrage qui soit simple dans sa conception, économique et facile d'utilisation.

L'invention porte ainsi sur un élément travaillant d'une machine agricole destiné à être monté sur une poutre sensiblement horizontale de la machine au moyen d'une structure de liaison déformable comportant au moins un bras supérieur et au moins un bras inférieur, ladite structure de liaison comportant un système de réglage présentant un mécanisme mobile et un organe de référence, le mécanisme mobile comportant un levier et un organe élastique, le levier étant monté mobile à rotation par rapport à l'organe élastique autour d'un premier axe, le mécanisme mobile admettant :
- un état engagé dans lequel le mécanisme mobile est maintenu contre l'organe de référence, l'état engagé admettant au moins une position de travail dans laquelle le système de réglage applique une force de terrage à l'élément travaillant ; et,
- un état de réglage dans lequel le mécanisme mobile est déplaçable par rapport à l'organe de référence autour d'un axe inférieur.

Dans l'élément travaillant selon l'invention, le mécanisme mobile comporte un deuxième axe distinct du premier axe, et dans lequel le mécanisme mobile admet un état intermédiaire dans lequel le levier est mobile en rotation autour du deuxième axe.

Ainsi, un report de charge s'opère entre les deux axes depuis et vers l'état engagé. Il est ainsi possible d'assurer le verrouillage automatique du système de réglage lorsque le mécanisme mobile est à l'état engagé ou lorsqu'il s'en approche par application d'une contrainte de rappel sur un axe distinct de celui autour duquel le levier pivote.

Selon une caractéristique avantageuse, à l'état intermédiaire, lorsque le premier axe se trouve d'un premier côté d'un plan passant par l'axe inférieur et par ledit deuxième axe, l'organe élastique contraint le levier vers l'état engagé, dans l'une des positions de travail du mécanisme. De manière préférée, le premier côté est le côté avant.

Selon une caractéristique avantageuse, à l'état intermédiaire, lorsque le premier axe se trouve d'un second côté d'un plan passant par l'axe inférieur et par ledit deuxième axe, l'organe élastique contraint le levier vers l'état de réglage. Préférentiellement, le second côté est le côté arrière.

Avantageusement, à l'état de réglage, l'organe élastique a une longueur de réglage constante et est déplaçable en rotation autour de l'axe inférieur.

Ainsi, à l'état de réglage, l'organe élastique se comporte comme une bielle et le système de réglage peut être réglé sans frottement sur les bras supérieurs et sans avoir à opposer manuellement de force d'élongation de l'organe élastique. L'ajustement de la force de terrage requiert donc peu d'effort de la part de l'utilisateur tout en garantissant une pression significative sur l'élément travaillant.

Selon une caractéristique avantageuse, un support de l'organe élastique est pourvu d'un organe de réglage en butée, la longueur de réglage de l'organe élastique étant déterminée par la position de l'organe de réglage en butée. Ainsi, l'organe élastique peut comporter une tourelle dans laquelle est monté l'organe de réglage en butée. Une surface d'extrémité d'une tourelle opposée peut alors venir en contact contre l'organe de réglage en butée.

Selon une configuration avantageuse particulière, le support et un pivot comportent chacun un alésage et l'organe de réglage en butée est réglable par insertion d'un outil correspondant dans les alésages lorsque ceux-ci sont alignés. Les alésages sont par exemple alignés lorsque la machine est levée et le système de réglage est en position neutre. Le réglage de la butée peut alors être effectué simplement, par exemple au moyen d'un tournevis de largeur appropriée.

De manière particulièrement avantageuse, ce sont le support inférieur et le pivot inférieur qui présentent ces alésages. L'accès à l'organe de butée est dissimulé sous la machine et empêche tout déréglage par une personne non qualifiée.

Alternativement, ce sont le support supérieur et le pivot supérieur qui présentent ces alésages.

Selon une caractéristique avantageuse, l'organe élastique comporte un ressort hélicoïdal.

Le ressort peut être à spires jointives à l'état de réglage. Ceci est notamment avantageux lorsque le système de réglage est exempt d'organe de réglage en butée distinct. Le ressort lui-même dans son état contracté sert de butée au système de réglage.

Le ressort peut également être à spires non jointives à l'état de réglage. C'est le cas lorsqu'un organe de réglage en butée est prévu. Le ressort est alors prévu plus court que la longueur minimale de l'organe élastique. Ainsi, l'organe élastique est précontraint et assure l'application d'une force de terrage importante quelle que soit la position de travail que prend le mécanisme mobile.

Avantageusement, à l'état engagé, le mécanisme mobile peut également prendre une position neutre dans laquelle le mécanisme mobile est maintenu contre l'organe de référence par l'élément élastique sans que le système de réglage n'applique de force de terrage à l'élément travaillant.

Cette caractéristique permet de limiter ou d'éviter le ballottage du système de réglage en position neutre.

L'invention porte encore sur une machine agricole comportant un élément travaillant comportant au moins certaines des caractéristiques décrites ci-dessus.

D'autres caractéristiques et avantages de l'invention se dégageront des exemples de réalisation non limitatifs de l'invention qui vont suivre et des dessins annexés dans lesquels :
- la figure 1 est une vue de côté d'un semoir de précision connu ;
- la figure 2 est une vue en perspective d'un premier mode de réalisation de la structure de liaison d'un élément semeur, pourvue d'un système de réglage de force de terrage selon l'invention ;
- la figure 3 est une vue en coupe longitudinale, partiellement écorchée, des éléments de la figure 2 ;
- les figures 4 et 5 sont des vues de côté des éléments de la figure 2, montrant le système de réglage respectivement dans une position de travail et dans une position de réglage ;
- la figure 6 est une vue écorchée en coupe longitudinale d'une poignée du système de réglage de la figure 2;
- les figures 7a, 7b et 7c sont des schémas illustrant un pion, un ergot et un axe pivot du système de réglage de la figure 2 dans un état engagé, dans un état intermédiaire et dans un état de réglage ;
- la figure 8 est une vue en perspective, partiellement écorchée d'un deuxième mode de réalisation d'une structure de liaison d'élément semeur ;
- la figure 9 est une vue en coupe longitudinale des éléments de la figure 8 ;
- les figures 10a, 10b et 10c sont des schémas illustrant un pion, un ergot et un axe pivot du système de réglage de la figure 8 dans un état engagé, dans un état intermédiaire et dans un état de réglage.

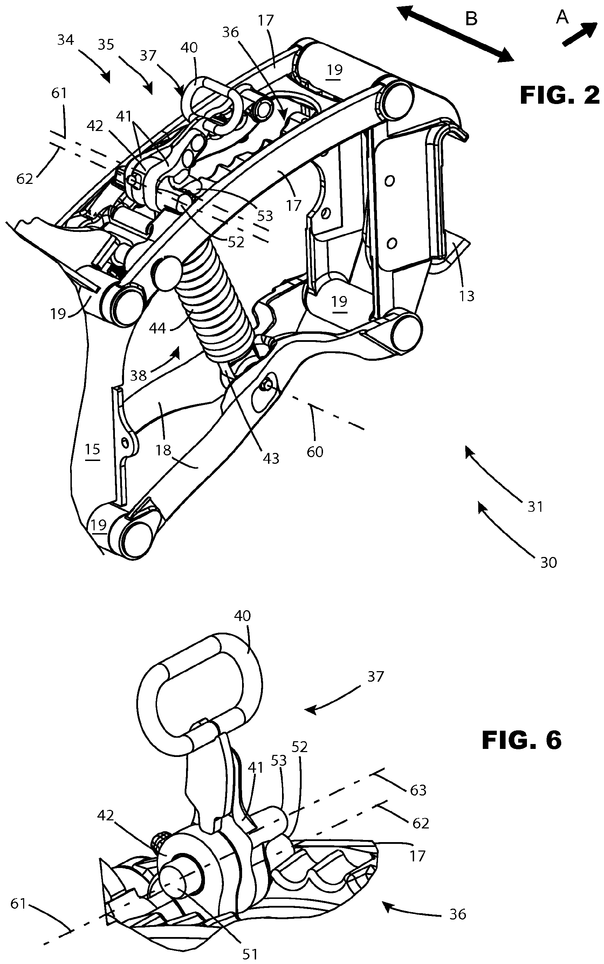

L'élément travaillant 5A illustré en figure 1 peut être avantageusement remplacé par un élément travaillant 30 (figure 2) présentant une structure de liaison 31 de type nouveau. La structure de liaison 31 comporte un système de réglage de la force de terrage 34, appelé plus simplement système de réglage 34 et décrit en référence aux figures 2 à 6 et 7a à 7c.

L'élément travaillant 30 et la structure de liaison 31 peuvent être avantageusement mis en œuvre dans un semoir tel que le semoir 1A illustré en figure 1. Le semoir 1A est attelé à un tracteur non représenté. Le semoir 1A peut être traîné, semi-portée ou porté.

La structure de liaison 31 peut être généralement mise en œuvre dans toute machine agricole dans laquelle les interactions entre les outils travaillants peuvent requérir l'application d'une force de terrage. Cette machine agricole peut être non limitativement du type semoir monograine, labour en bandes (en anglais strip-till), ou autres types de machines de semis ou de travail du sol.

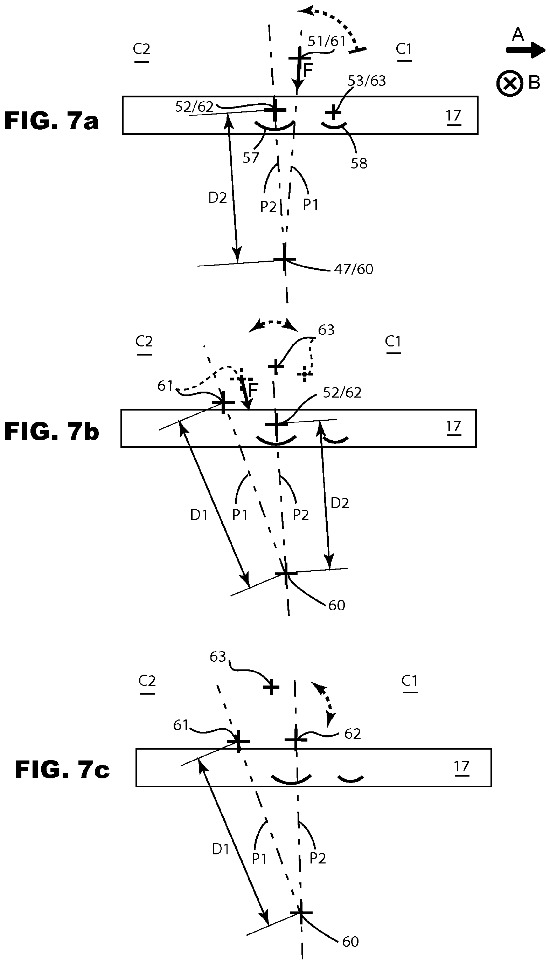

Sur les figures, une flèche A représente le sens général d'avance de la machine ou encore l'orientation de la machine de l'arrière vers l'avant lorsqu'elle est à l'arrêt. Une double flèche B, appelée direction B, en figure 2 est d'orientation horizontale et transversale à l'orientation de A, et illustre l'orientation d'un certain nombre d'axes décrits ci-après. En figure 7a, la direction B est perpendiculaire au plan de la figure. Les éléments communs entre les figures 7a à 7c sont illustrés par rapport aux mêmes orientations verticale et horizontale.

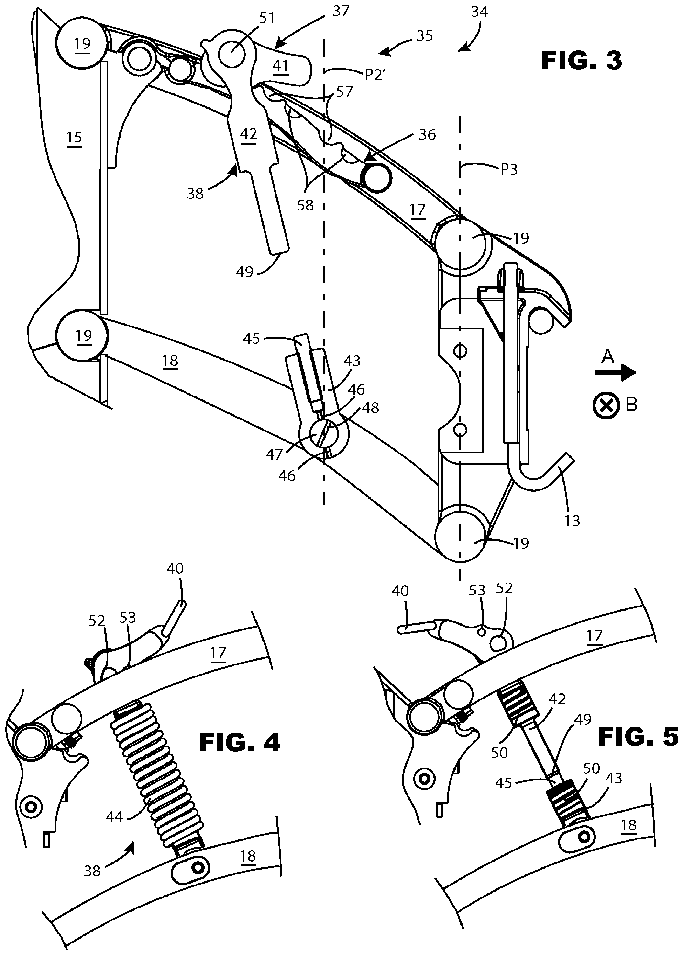

Comme il est visible en figure 2, la structure de liaison 31 présente ici une paire de bras supérieurs 17 sensiblement parallèles entre eux et une paire de bras inférieurs 18 également sensiblement parallèles entre eux. La structure de liaison 31 comporte aussi une pince 13 à l'avant et une fixation 15 à l'arrière. Les bras 17 ou 18 sont montés à chacune de leurs extrémités sur la pince 13 et sur la pince 15 par un pivot 19 transversal respectif. Chaque pivot 19 relie également entre elles les extrémités des paires de bras 17 ou 18 situées d'un même côté. Les pivots 19 sont donc au nombre de quatre. Vus de côté, les quatre pivots 19 forment une structure en parallélogramme (voir par exemple en figure 3). En pratique, les paires de bras 17 ou 18 sont respectivement formées en une seule pièce.

Dans un premier mode de réalisation de la structure de liaison 31, le système de réglage 34 présente un mécanisme mobile 35 et une crémaillère fixe 36 (figures 2 et 3).

Le mécanisme mobile 35 présente un levier 37 et un organe élastique 38. Le mécanisme 35 est monté sur les bras inférieurs 18 autour d'un pivot inférieur 47 orienté selon un axe 60 de direction B (fig. 2). Le mécanisme 35 est généralement mobile en rotation dans un plan vertical avant-arrière orienté selon la direction A. Le levier 37 est lui-même mobile en rotation par rapport à l'organe élastique 38. Le levier 37 est ici centré par rapport aux bras 17.

Le levier 37 présente ici une poignée 40 et deux flasques latéraux 41 (figure 6).

La poignée 40 comporte dans l'exemple représenté une tige recourbée sur elle-même en ovale, de diamètre suffisamment important pour permettre de la saisir facilement et sans douleur. L'invention n'est en aucun cas restreinte à la poignée illustrée. La poignée 40 peut alternativement prendre la forme d'une tige horizontale orientée selon la direction B, ou d'autres formes.

Chaque flasque 41 est pourvu d'un pion 52 et d'un ergot 53 (figure 2). Les pions 52 et ergots 53 sont orientés chacun selon un axe respectif 62 ou 63 parallèle à la direction B. Les pions 52 sont ici de taille plus importante que les ergots 53 à la fois en longueur et en diamètre, puisque les pions 52 jouent le rôle de pivots et sont amenés à subir des efforts transversaux. Ceci n'est toutefois pas limitatif, les ergots 53 peuvent être encore de dimensions égales aux dimensions des pions 52 ou d'autre taille.

L'organe élastique 38 comporte ici deux supports 42 et 43 sous forme de tourelles allongées, un ressort 44 et un organe de réglage 45.

La tourelle 43 est montée pivotante sur les bras inférieurs 18 via un pivot inférieur 47. Dans le mode de réalisation représenté, la tourelle 43 est traversée dans sa longueur par un alésage 46 qui, dans une position avancée du système de réglage 34, est aligné avec un alésage 48 traversant le pivot inférieur 47.

Le ressort 44 est ici un ressort hélicoïdal de traction. Il est monté dans une gorge hélicoïdale 50 ménagée sur une surface externe de chacune des tourelles 42 et 43 (voir figure 5). Le ressort 44 tend à rapprocher les tourelles 42 et 43 l'une vers l'autre. Le ressort 44 est préférentiellement d'une rigidité telle qu'il les maintient coaxiales à tout moment.

L'organe de réglage 45 est ici une tige filetée. La tige 45 est montée dans la tourelle 43, coaxiale avec l'alésage 46 (voir figure 3). La tige filetée 45 sert alors de butée à une surface d'extrémité 49 de la tourelle 42 dans un état déployé du levier 37.

La position de la tige 45 est ici ajustable par insertion par en-dessous d'un outil approprié dans les alésages 46 et 48 lorsque ceux-ci sont alignés. A cet effet, une encoche peut avantageusement être prévue à l'extrémité de la tige 45 insérée dans la tourelle 43 et offrir une prise à outil tel qu'un un tournevis.

Un pivot supérieur 51, d'axe 61 orienté selon la direction B, traverse la tourelle 42 dans sa partie haute et dans sa largeur. Le pivot 51 relie la tourelle 42 aux flasques 41 (figures 3 et 6). Le pivot 51 permet la rotation du levier 37 par rapport à l'organe élastique 38.

Le pivot 51 reste préférentiellement mais non limitativement toujours au-dessus des bras supérieurs 17 quelle que soit l'état du système de réglage 34.

La crémaillère 36, quant à elle, est fixée longitudinalement entre les bras supérieurs 17. La crémaillère 36 forme organe de référence pour le mécanisme mobile 35. La crémaillère 36 présente différents crans 57 et 58, orientés ici vers le haut, c'est-à-dire ici à l'opposé du bras inférieur 18 ou plus généralement à l'opposé du sol. Les crans 57 et 58 sont situés préférentiellement mais non limitativement sur un arc de cercle centré sur l'axe 60 du pivot inférieur 47 à l'état de réglage décrit ci-après. Les crans 57 servent de logement aux pions 52 et aux ergots 53 et sont en correspondance de forme avec les pions 52. La configuration de la crémaillère autorise toutefois certains des crans 57, plus profonds que les crans 58, à accueillir des ergots 53. Les crans 58 sont de plus faible profondeur, et ne peuvent accueillir que les ergots 53. Alternativement, la crémaillère peut ne comporter que des crans similaires tels que les crans 57.

La conformation du système de réglage 34 est avantageuse en ce sens qu'elle offre une meilleure visibilité sur la crémaillère que l'existant. Il est donc plus facile de repérer la position dans laquelle, ou en face de laquelle, le système de réglage 34 est positionné.

Le fonctionnement du système de réglage 34 ressortira plus clairement de ce qui suit en référence aux figures 7a à 7c. Les dimensions et les angles choisis pour ces figures sont arbitraires, notamment l'écartement entre les différents éléments représentés ou la longueur de la flèche F représentant la contrainte de rappel exercée par le ressort 44.

Comme illustré aux figures 7a à 7c et décrit ci-dessous, le mécanisme mobile 35 admet trois états :
- un état engagé dans lequel il peut prendre sur la crémaillère 36 l'une de plusieurs positions de travail ou une position neutre optionnelle ; à l'état engagé, les pions 52 et les ergots 53 sont engagés dans la crémaillère 36 et bloquent le système de réglage 34 contre la structure de liaison 31 ;
- un état de réglage dans lequel il peut être déplacé et mis en regard de l'une ou l'autre des positions de travail ;
- un état intermédiaire entre l'état de réglage et l'état engagé.

Sur les figures 7a à 7c, un plan P2 passe par les axes parallèles 60 et 62, c'est-à-dire qu'il inclut l'axe de rotation 60 du pivot inférieur 47 et l'axe 62 des pions 52. Un demi-plan P1 de frontière l'axe 60 inclut l'axe 61, c'est-à-dire qu'il s'étend depuis l'axe de rotation 60 du pivot inférieur 47 et passe par l'axe 61 du pivot supérieur 51. L'axe 61 est nommé premier axe et l'axe 62 est nommé deuxième axe.

Comme illustré en figure 7a, le levier 37 est préférentiellement abaissé vers l'avant de la machine pour faire atteindre au système de réglage 34 un état engagé. Le système de réglage 34 est ici représenté dans une position de travail, apte à appliquer une force de terrage à l'élément semeur 30. Plus précisément, dans cette position de travail particulière, le pion 52 est logé dans un cran 57 et l'ergot 53 dans un cran 58. Dans d'autres positions de travail, le pion 52 et l'ergot 53 sont logés dans deux crans 57 successifs.

Sur cette figure, le demi-plan P1 s'étend à l'avant du plan P2. En d'autres termes, en position engagée, le pivot 51 (et l'axe 61) se trouve d'un premier côté C1 situé à l'avant du plan P2. La contrainte de rappel F qu'exerce le ressort 44 ou plus généralement l'élément élastique 38 maintient alors automatiquement le levier 37 à l'état engagé, ici contre la crémaillère 36.

En figure 7b, le levier 37 a été remonté en un état intermédiaire dans lequel les ergots 53 ont quitté les crans 58 alors que les pions 52 sont toujours engagés dans les crans 57. Deux positions distinctes des axes 61 et 63 sont illustrées : l'une en traits pointillés, l'autre en traits pleins.

Dans la position des axes 61 et 63 représentée en pointillés, l'organe élastique 38 exerce toujours une contrainte de rappel F sur le levier 37. Cette contrainte F évolue lorsque le demi-plan P1 évolue autour de l'axe 60 ou que l'axe 61 tourne autour de l'axe 62.

La contrainte F est maximale lorsque le demi-plan P1 est confondu avec le plan P2, c'est-à-dire lorsque les axes 60, 61 et 62 sont alignés ou encore lorsque le pion 52 est situé entre les pivots 47 et 51.

Lorsque le demi-plan P1 se trouve d'un côté C2 à l'arrière du plan P2, la contrainte F rappelle le levier 37 vers l'état de réglage. Enfin, la contrainte F n'affecte plus le levier 37 lorsque l'élément élastique 38 atteint une longueur de réglage D1 qui est ici une longueur minimale constante de référence.

Dans l'exemple illustré, cette longueur de réglage D1 est égale à l'écartement entre les axes 60 et 61 (voir fig. 7b) et est déterminée par la position de la tige 45 dans la tourelle 43, lorsque la surface d'extrémité 49 vient en contact avec la tige 45. Le réglage de la tige 45 a été décrit plus haut.

Le réglage en butée de l'organe élastique 38 permet de jouer sur la longueur D1. Ainsi, il est possible de régler la proximité du pivot 51 au plan P2 lorsque l'organe élastique 38 parvient à la longueur D1 depuis l'état intermédiaire. Un pivot 51 rapproché de P2 permet de réduire le moment de la contrainte F s'appliquant sur le pivot 51 et donc l'effort que l'utilisateur doit mettre en œuvre pour basculer le levier 37.

Alternativement, la longueur de réglage D1 est déterminée par la longueur minimale du ressort 44 qui peut être à spires jointives ou non jointives. La tourelle 42 n'a alors pas de pièce contre laquelle venir en butée soit parce que l'extrémité de la tige de réglage 45 est en retrait par rapport à la position rétractée du ressort 44, soit parce que l'organe élastique 38 est exempt d'organe de réglage en butée.

Entre les positions représentées en figures 7a et 7b, l'écartement entre les axes 60 et 62 conserve une longueur constante D2 puisque le basculement du levier 37 se fait autour du pion 52. Au contraire, l'organe élastique 38 s'allonge jusqu'au franchissement du plan P2 puis se rétracte jusqu'à atteindre la longueur de réglage D1.

En figure 7c, par contre, le levier 37 a atteint un état de réglage dans lequel le pion 52 et l'ergot 53 ont quitté les crans 57 et 58.

Entre les positions représentées en traits pleins en figures 7b et 7c, l'écartement entre les axes 60 et 61 conserve une longueur constante égale à la longueur de réglage D1 puisque le levier 37 tourne cette fois autour du pivot 51.

Puisque l'élément élastique 38 a atteint la longueur de réglage D1 en-deçà de laquelle il ne peut plus se contracter, il se comporte comme une bielle. Et puisque ni les pions 52 ni les ergots 53 ne sont engagés dans les crans 57 et 58, il est possible de faire tourner l'élément élastique 38 autour du pivot 47. Le mécanisme mobile 35 peut ainsi être déplacé sur la structure de liaison 31 jusqu'à une autre position de travail ou la position neutre.

Ainsi, pour régler la force de terrage s'appliquant sur l'élément semeur 30, il suffit, depuis une première position engagée, de :
- relever le levier 37 par rotation autour des pions 52 (jusqu'à l'état intermédiaire) puis du pivot 51 (jusqu'à l'état de réglage),
- faire pivoter le mécanisme mobile 35 en regard d'une deuxième position souhaitée, et,
- rabaisser le levier 37 par rotation autour du pivot 51 (jusqu'à l'état intermédiaire) puis du pion 52 jusqu'à ce que l'ergot 53 soit engagé dans la crémaillère 36 dans une deuxième position engagée.

En pratique, dès que le pion 52 a quitté le cran 57 dans lequel il était engagé, l'organe élastique 38 peut commencer à basculer d'avant en arrière autour de l'axe 60.

Le système de réglage 34 possède en outre une position engagée particulière dite position neutre dans laquelle il n'applique aucune force de terrage à l'élément semeur 30 ou tout du moins n'applique qu'une force négligeable devant le poids de l'élément semeur. Cette position neutre est optionnelle. Dans cette position, le plan P2' portant les axes 60 et 62 est sensiblement parallèle à un plan P3 portant les pivots 19 situés à l'avant de la structure 31, du côté de la pince 13 (figure 3). Une paire de crans 57 et 58 correspondante est donc prévue à l'avant de la crémaillère. Ce sont par exemple les crans 57 et 58 les plus à droite en figure 3.

Il convient de noter qu'en position neutre, si le système de réglage 34 n'applique pas de force de terrage, l'élément élastique 38 est néanmoins sous tension. Par conséquent la contrainte F s'appliquant sur l'élément élastique évite le ballottage du système de réglage 34 lorsque le semoir 1 est relevé.

En variante non représentée, l'état engagé est atteint en abaissant le levier vers l'arrière de la machine.

En variante non représentée, l'organe de réglage 45 est monté sur la tourelle supérieure 42. La tourelle 42 est alors traversée dans sa longueur par un alésage qui est aligné avec un alésage 48 traversant le pivot inférieur 47 dans une position particulière du système de réglage 34, par exemple une position avancée du système de réglage 34.

Dans une autre variante non représentée, le pivot supérieur 51 peut être formé directement de corps avec le ressort de traction. En d'autres termes, l'extrémité supérieure du ressort de traction forme le pivot supérieur sur lequel est monté le levier 37.

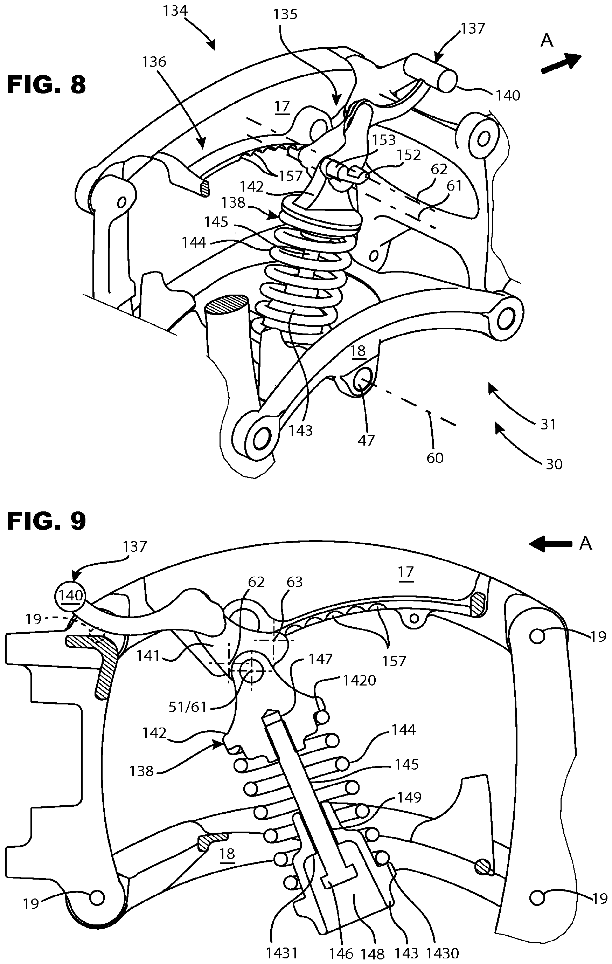

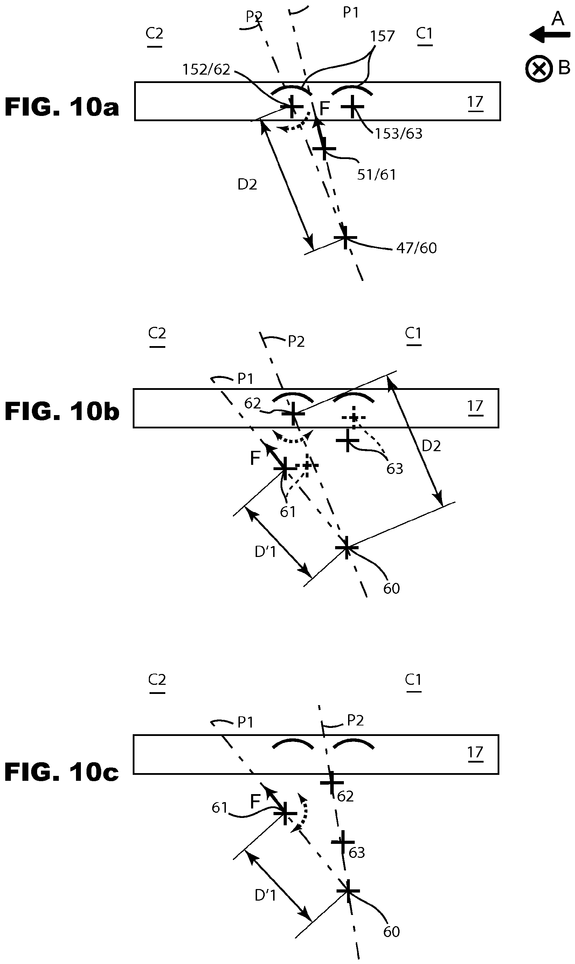

Dans un deuxième mode de réalisation de la structure de liaison 31 représenté aux figures 8 et 9, et schématiquement aux figures 10a à 10c, un système de réglage 134 comporte un mécanisme mobile 135 et un organe de référence 136. Dans le texte qui suit, les éléments analogues sur le principe aux éléments du premier mode de réalisation portent la même référence numérique.

Le mécanisme mobile 135 comporte un levier 137 et un organe élastique 138. Le levier 137 est muni d'une poignée 140 en forme de barre, et de deux flasques latéraux 141. Le levier 137 est toujours accessible depuis le dessus de la structure de liaison 31, c'est-à-dire ici au-dessus de l'organe de référence 136. Les flasques 141 sont fixés entre eux et à la poignée 140. Les flasques 141 sont en outre montés pivotants sur un support 142 de l'organe élastique 138 décrit ci-après par un pivot supérieur 51 d'axe 61 semblable à celui du premier mode de réalisation.

De manière analogue aux flasques 41, les flasques 141 présentent chacun un pion 152 et un ergot 153. Si la forme des pions 152 et ergots 153 diffère légèrement des pions 52 et ergots 53 dans la mesure où chaque pion 152 est relié à l'ergot 153 adjacent par une portion de même hauteur, leur rôle est similaire aux pions 52 et ergots 53 : les pions 152 servent de pivots sur une partie de la course de basculement du levier 137, plus précisément à l'état intermédiaire, et les ergots 153 forment élément de blocage à l'état bloqué, comme dans le premier mode de réalisation. Les pions 152 ont pour axe de rotation commun un axe 62, et les ergots 153 ont pour axe de rotation commun un axe 63 (figures 8, 9 et 10a à 10c).

L'organe élastique 138 comporte deux supports 142 et 143 sous forme de tourelles allongées, un ressort 144 et un organe de réglage en butée 145.

Le ressort 144 est ici un ressort hélicoïdal de compression.

L'organe de réglage en butée 145 est ici, non limitativement, une vis à tête hexagonale ; alternativement, la tête de vis est d'un autre type approprié, tel qu'une tête cylindrique creuse à six pans. En variante, l'organe de réglage en butée peut prendre d'autres formes, par exemple un système comportant un jeu de cales de réglage. L'organe de réglage en butée peut encore comporter une tige à perforations transversales et traversantes dans lesquelles une goupille de réglage peut être insérée.

La tourelle 142 présente ici un trou fileté 147 destiné à recevoir l'extrémité de la vis 145.

La tourelle 143 est montée pivotante sur les bras inférieurs 18 via un pivot 47 d'axe 60. La tourelle 143 est ici creuse, en forme de douille présentant un logement interne 148. Dans ce mode de réalisation, la paroi de fond 1431 de la tourelle 143 est traversée de part en part par un alésage lisse 149, c'est-à-dire non fileté. La vis 145 est montée coulissante dans l'alésage 149. La paroi de fond 1431 forme butée pour la tête 146 de vis 145. La longueur maximale de l'organe élastique 138 est donc ici réglable par vissage et dévissage de l'organe de réglage en butée 145.

Les tourelles 142 et 143 présentent chacune une surface annulaire plane respective 1420 et 1430 formant appui pour le ressort 144. Les tourelles 142 et 143 peuvent chacune comporter une surface généralement transversale aux surface annulaires 1420 et 1430, par exemple cylindrique ou à rainure hélicoïdale, correspondant au diamètre interne du ressort 144 en ses zones de contact avec les tourelles 142 et 143.

L'écartement maximum entre les deux tourelles 142 et 143 est réglable et est déterminé par la profondeur d'engagement de la vis 145 dans le trou fileté 147.

L'organe de référence 136 que comporte le mécanisme mobile 135 est une crémaillère, c'est-à-dire une barre crantée, analogue à l'organe de référence 36 du premier mode de réalisation. Toutefois, les crans 157 que comporte l'organe de référence 136 sont orientés vers le bas, c'est-à-dire ici vers le bras inférieur (18) ou plus généralement vers le sol. Cette orientation a pour avantage de limiter la rétention de sol (terre, sable, etc.) dans les crans 157, donc l'encrassement de la structure de liaison 31. On limite ainsi le risque de défaut de réglage lié à un enfoncement insuffisant des pions 152 et des ergots 153 dans l'organe de référence 136. On limite aussi l'écaillement de la peinture qui pourrait favoriser la corrosion de la machine et en dégrader l'esthétique.

Par analogie aux figures 7a à 7c du premier mode de réalisation, des exemples de position des axes 60 à 63 sont illustrés aux figures 10a à 10c.

Par analogie au premier mode de réalisation, le mécanisme mobile 135 du deuxième mode de réalisation admet trois états :
- un état engagé dans lequel les pions 152 et les ergots 153 sont engagés dans la crémaillère 136 et bloquent le système de réglage 134 contre la structure de liaison 31 ;
- un état de réglage ;
- un état intermédiaire entre l'état de réglage et l'état engagé.

Sur les figures 10a à 10c, un plan P2 passe par les axes parallèles 60 et 62, c'est-à-dire qu'il inclut l'axe de rotation 60 du pivot inférieur 47 et l'axe 62 des pions 152. Un demi-plan P1 de frontière l'axe 60 inclut l'axe 61, c'est-à-dire qu'il s'étend depuis l'axe de rotation 60 du pivot inférieur 47 et passe par l'axe 61 du pivot supérieur 51.

Comme illustré en figure 10a, le levier 137 est ici préférentiellement abaissé vers l'avant de la machine pour faire atteindre au système de réglage 134 un état engagé. Le système de réglage 134 est ici représenté dans une position de travail, apte à appliquer une force de terrage à l'élément semeur 30. Plus précisément, dans cette position de travail particulière, les pions 152 et les ergots 153 sont logés chacun dans un cran 157.

Sur cette figure, le demi-plan P1 s'étend à l'arrière du plan P2. En d'autres termes, en position engagée, le pivot 51 (et l'axe 61) se trouve d'un premier côté C1 situé ici à l'arrière du plan P2. La contrainte de rappel F qu'exerce le ressort 144 ou plus généralement l'élément élastique 138 maintient alors automatiquement le levier 137 à l'état engagé, ici contre la crémaillère 136.

En figure 10b, le levier 137 a été remonté en un état intermédiaire dans lequel les ergots 153 ont quitté les crans 157 alors que les pions 152 sont toujours engagés dans les crans respectifs 157. Deux positions distinctes des axes 61 et 63 sont illustrées : l'une en traits pointillés, l'autre en traits pleins.

Dans la position des axes 61 et 63 représentée en pointillés, l'organe élastique 138 exerce toujours une contrainte de rappel F sur le levier 137. Cette contrainte F évolue lorsque le demi-plan P1 évolue autour de l'axe 60 ou que l'axe 61 tourne autour de l'axe 62.

La contrainte F est maximale lorsque le demi-plan P1 est confondu avec le plan P2, c'est-à-dire lorsque les axes 60, 61 et 62 sont alignés ou encore lorsque le pion 152 est situé entre les pivots 47 et 51.

Lorsque le demi-plan P1 se trouve du côté C2 situé à l'avant du plan P2, la contrainte F rappelle le levier 137 vers l'état de réglage. Enfin, la contrainte F n'affecte plus le levier 137 lorsque l'élément élastique 138 atteint une longueur de réglage D'1 qui est une longueur maximale constante de référence dans le deuxième mode de réalisation.

Dans l'exemple illustré, cette longueur de réglage D'1 est égale à l'écartement entre les axes 60 et 61 (voir fig. 10b) et est déterminée par la position de la vis 145 dans la tourelle 143, lorsque la paroi de fond 1431 vient en contact avec la tête 146 de la vis 145.

Le réglage en butée de l'organe élastique 138 permet de jouer sur la longueur D'1. Ainsi, il est possible de régler la proximité du pivot 51 au plan P2 lorsque l'organe élastique 138 parvient à la longueur de réglage D'1 depuis l'état intermédiaire.

Alternativement, la longueur de réglage D'1 est déterminée par la longueur maximale du ressort 144. La tourelle 143 n'a alors pas de pièce contre laquelle venir en butée soit parce que la tête 146 est au-delà de la position atteinte par la tourelle 143 lorsque le ressort 144 est déployé, soit parce que l'organe élastique 138 est exempt d'organe de réglage en butée (par exemple lorsque la précision de fabrication justifie de s'en passer).

Entre les positions représentées en figures 10a et 10b, l'écartement entre les axes 60 et 62 conserve une longueur constante D2 puisque le basculement du levier 137 se fait autour des pions 152 et que la force F maintient les pions 152 dans le cran 157. Au contraire, l'organe élastique 138 se rétracte jusqu'au franchissement du plan P2 puis s'allonge jusqu'à atteindre la longueur de réglage D'1.

En figure 10c, par contre, le levier 37 a atteint un état de réglage dans lequel les pions 152 et les ergots 153 ont quitté les crans 157.

Entre les positions représentées en traits pleins en figures 10b et 10c, l'écartement entre les axes 60 et 61 conserve une longueur constante égale à la longueur de réglage D'1 puisque le levier 137 tourne cette fois autour du pivot 51.

Puisque l'élément élastique 138 a atteint la longueur de réglage D'1 au-delà de laquelle il ne peut plus se détendre, il se comporte comme une bielle. Et puisque ni les pions 152 ni les ergots 153 ne sont engagés dans les crans 157, il est possible de faire tourner l'élément élastique 138 autour du pivot 47. Le mécanisme mobile 135 peut ainsi être déplacé sur la structure de liaison 31 jusqu'à une autre position de travail ou la position neutre.

Ainsi, pour régler la force de terrage s'appliquant sur l'élément semeur 30, il suffit, depuis une première position engagée, de :
- relever le levier 137 par rotation autour des pions 152 (jusqu'à l'état intermédiaire) puis du pivot 51 (jusqu'à l'état de réglage),
- faire pivoter le mécanisme mobile 135 en regard d'une deuxième position souhaitée, et,
- rabaisser le levier 137 par rotation autour du pivot 51 (jusqu'à l'état intermédiaire) puis des pions 152 jusqu'à ce que les ergots 153 soient engagés dans la crémaillère 136 dans une deuxième position engagée.

En pratique, dès que les pions 152 ont quitté le cran 157 dans lequel ils étaient engagés, l'organe élastique 138 peut commencer à basculer d'avant en arrière autour de l'axe 60.

En variante, le levier peut être orienté vers l'arrière à l'état engagé du mécanisme.

## Revendications

1. Elément travaillant d'une machine agricole destiné à être monté sur une poutre sensiblement horizontale de la machine au moyen d'une structure de liaison (31) déformable comportant au moins un bras supérieur (17) et au moins un bras inférieur (18), ladite structure de liaison (31) comportant un système de réglage de la force de terrage (34 ; 134) présentant un mécanisme mobile (35 ; 135) et un organe de référence (36 ; 136),
le mécanisme mobile (35) comportant un levier (37 ; 137) et un organe élastique (38 ; 138), le levier (37 ; 137) étant monté mobile à rotation par rapport à l'organe élastique (38 ; 138) autour d'un premier axe (61),
le mécanisme mobile (35 ; 135) admettant :
- un état engagé dans lequel le mécanisme mobile (35 ; 135) est maintenu contre l'organe de référence (36 ; 136), et dans lequel le mécanisme mobile (35 ; 135) peut prendre au moins une position de travail dans laquelle le système de réglage (34 ; 134) applique une force de terrage à l'élément travaillant (30) ; et,
- un état de réglage dans lequel le mécanisme mobile (35 ; 135) est déplaçable par rapport à l'organe de référence (36 ; 136) autour d'un axe inférieur (60),
***caractérisé en ce que,***
le mécanisme mobile (35 ; 135) comporte un deuxième axe (62) distinct du premier axe (61),
le mécanisme mobile (35 ; 135) admet un état intermédiaire dans lequel le levier est mobile en rotation autour du deuxième axe (62).

2. Elément travaillant selon la revendication précédente, dans lequel, à l'état intermédiaire, lorsque le premier axe (61) se trouve d'un premier côté (C1) d'un plan (P2) passant par l'axe inférieur (60) et par le deuxième axe (62), l'organe élastique (38 ; 138) contraint le levier (37 ; 137) vers l'organe de référence (36 ; 136).

3. Elément travaillant selon l'une des revendications précédentes, dans lequel, à l'état intermédiaire, lorsque le premier axe (61) se trouve d'un second côté (C2) d'un plan (P2) passant par l'axe inférieur (60) et le deuxième axe (62), l'organe élastique (38 ; 138) contraint le levier (37 ; 137) vers l'état de réglage.

4. Elément travaillant selon l'une des revendications précédentes, dans lequel, à l'état de réglage, l'organe élastique (38 ; 138) a une longueur de réglage constante (D1 ; D'1) et est déplaçable en rotation autour de l'axe inférieur (60).

5. Elément travaillant selon la revendication précédente, dans lequel un support (42, 43 ; 142, 143) de l'organe élastique (38 ; 138) est pourvu d'un organe de réglage en butée (45 ; 145), la longueur de réglage (D1 ; D'1) de l'organe élastique (38 ; 138) étant déterminée par la position de l'organe de réglage en butée (45 ; 145).

6. Elément travaillant selon la revendication précédente, dans lequel le support (42, 43) et un pivot (47, 51) comportent chacun un alésage (46, 48), la position de l'organe de réglage en butée (45) étant réglable par insertion d'un outil correspondant dans les alésages lorsque ceux-ci sont alignés.

7. Elément travaillant selon l'une des revendications précédentes, dans lequel l'organe élastique (38) comporte un ressort hélicoïdal de traction (44).

8. Elément travaillant selon l'une des revendications 1 à 4, dans lequel l'organe élastique (38) comporte un ressort hélicoïdal de traction (44) qui est à spires jointives à l'état de réglage du mécanisme mobile (35).

9. Elément travaillant selon l'une des revendications 1 à 8, dans lequel l'organe de référence (36) est une crémaillère comportant des crans (57, 58) orientés vers le haut, c'est-à-dire à l'opposé du bras inférieur (18).

10. Elément travaillant selon l'une des revendications 1 à 6, dans lequel l'organe élastique (138) comporte au moins un ressort de compression (144).

11. Elément travaillant selon l'une des revendications 1 à 6 et 10, dans lequel l'organe de référence (136) est une crémaillère comportant des crans (157) orientés vers le bas, c'est-à-dire vers le bras inférieur (18).

12. Elément travaillant selon la revendication 5, dans lequel l'organe de réglage en butée (145) est une vis à tête hexagonale, et dans lequel une paroi d'un support (143) forme butée pour la tête (146) de la vis à tête hexagonale.

13. Elément travaillant selon l'une des revendications précédentes, à l'état engagé le mécanisme mobile (35 ; 135) peut également prendre une position neutre dans laquelle le mécanisme mobile (35 ; 135) est maintenu contre l'organe de référence (36 ; 136) par l'élément élastique (38 ; 138) sans que le système de réglage de la force de terrage (34 ; 134) n'applique de force de terrage à l'élément travaillant (30).

14. Machine agricole comportant un élément travaillant selon l'une des revendications 1 à 13.

## Patentansprüche

1. Arbeitendes Element einer landwirtschaftlichen Maschine, das dazu bestimmt ist, auf einem im Wesentlichen horizontalen Balken der Maschine mittels einer verformbaren Verbindungsvorrichtung (31) angebracht zu werden, die mindestens einen Oberarm (17) und mindestens einen Unterarm (18) umfasst, wobei die Verbindungsvorrichtung (31) ein Einstellsystem der Anpresskraft (34; 134) umfasst, das einen beweglichen Mechanismus (35; 135) und ein Bezugselement (36; 136) aufweist,
wobei der bewegliche Mechanismus (35) einen Hebel (37; 137) und ein elastisches Element (38; 138) umfasst, wobei der Hebel (37; 137) in Bezug auf das elastische Element (38; 138) drehbar um eine erste Achse (61) angebracht ist,
wobei der bewegliche Mechanismus (35; 135) Folgendes zulässt:
- einen Eingriffszustand, in dem der bewegliche Mechanismus (35; 135) gegen das Bezugselement (36; 136) gehalten wird und in dem der bewegliche Mechanismus (35; 135) mindestens eine Arbeitsposition einnehmen kann, in der das Einstellsystem (34; 134) eine Anpresskraft auf das arbeitende Element (30) ausübt; und
- einen Einstellzustand, in dem der bewegliche Mechanismus (35; 135) in Bezug auf das Bezugselement (36; 136) um eine untere Achse (60) verschiebbar ist,
***dadurch gekennzeichnet, dass***
der bewegliche Mechanismus (35; 135) eine zweite Achse (62) umfasst, die sich von der ersten Achse (61) unterscheidet,
der bewegliche Mechanismus (35; 135) einen Zwischenzustand zulässt, in dem der Hebel um die zweite Achse (62) drehbar ist.

2. Arbeitendes Element nach dem vorhergehenden Anspruch, wobei, im Zwischenzustand, wenn sich die erste Achse (61) auf einer ersten Seite (C1) einer Ebene (P2) befindet, die durch die untere Achse (60) und durch die zweite Achse (62) verläuft, das elastische Element (38; 138) den Hebel (37; 137) zum Bezugselement (36; 136) hin zwingt.

3. Arbeitendes Element nach einem der vorhergehenden Ansprüche, wobei, im Zwischenzustand, wenn sich die erste Achse (61) auf einer zweiten Seite (C2) einer Ebene (P2) befindet, die durch die untere Achse (60) und die zweite Achse (62) verläuft, das elastische Element (38; 138) den Hebel (37; 137) in den Einstellzustand zwingt.

4. Arbeitendes Element nach einem der vorhergehenden Ansprüche, wobei, im Einstellzustand, das elastische Element (38; 138) eine konstante Einstelllänge (D1; D'1) aufweist und um die untere Achse (60) drehend verschiebbar ist.

5. Arbeitendes Element nach dem vorhergehenden Anspruch, wobei ein Träger (42, 43; 142, 143) des elastischen Elements (38; 138) mit einem Anschlageinstellelement (45; 145) versehen ist, wobei die Einstelllänge (D1; D'1) des elastischen Elements (38; 138) durch die Position des Anschlageinstellelements (45; 145) bestimmt wird.

6. Arbeitendes Element nach dem vorhergehenden Anspruch, wobei der Träger (42, 43) und ein Drehzapfen (47, 51) jeweils eine Bohrung (46, 48) umfassen, wobei die Position des Anschlageinstellelements (45) durch Einführen eines entsprechenden Werkzeugs in die Bohrungen einstellbar ist, wenn diese ausgerichtet sind.

7. Arbeitendes Element nach einem der vorhergehenden Ansprüche, wobei das elastische Element (38) eine Zugschraubenfeder (44) umfasst.

8. Arbeitendes Element nach einem der Ansprüche 1 bis 4, wobei das elastische Element (38) eine Zugschraubenfeder (44) umfasst, die aneinanderliegende Windungen im Einstellzustand des beweglichen Mechanismus (35) aufweist.

9. Arbeitendes Element nach einem der Ansprüche 1 bis 8, wobei das Bezugselement (36) eine Zahnstange ist, die Ausschnitte (57, 58) umfasst, die nach oben ausgerichtet sind, das heißt dem Unterarm (18) entgegengesetzt.

10. Arbeitendes Element nach einem der Ansprüche 1 bis 6, wobei das elastische Element (138) mindestens eine Druckfeder (144) umfasst.

11. Arbeitendes Element nach einem der Ansprüche 1 bis 6 und 10, wobei das Bezugselement (136) eine Zahnstange ist, die Ausschnitte (157) umfasst, die nach unten ausgerichtet sind, das heißt in Richtung des Unterarms (18).

12. Arbeitendes Element nach Anspruch 5, wobei das Anschlageinstellelement (145) eine Sechskantschraube ist und wobei eine Wand eines Trägers (143) einen Anschlag für den Kopf (146) der Sechskantschraube bildet.

13. Arbeitendes Element nach einem der vorhergehenden Ansprüche, wobei, im Eingriffszustand, der bewegliche Mechanismus (35; 135) auch eine neutrale Position einnehmen kann, in der der bewegliche Mechanismus (35; 135) durch das elastische Element (38; 138) gegen das Bezugselement (36; 136) gehalten wird, ohne dass das Einstellsystem der Anpresskraft (34; 134) eine Anpresskraft auf das arbeitende Element (30) ausübt.

14. Landwirtschaftliche Maschine mit einem arbeitenden Element nach einem der Ansprüche 1 bis 13.

## Claims

1. Working element of an agricultural machine intended to be mounted on a substantially horizontal beam of the machine using a deformable connecting structure (31) including at least one upper arm (17) and at least one lower arm (18), the said connecting structure (31) comprising a down-pressure adjusting system (34; 134) having a movable mechanism (35; 135) and a reference member (36; 136),
the movable mechanism (35) comprising a lever (37; 137) and a resilient member (38; 138), the lever (37; 137) being mounted rotatably relative to the resilient member (38; 138) about a first axis (61),
the movable mechanism (35; 135) allowing:
- an engaged state in which the movable mechanism (35; 135) is held against the reference member (36; 136), and wherein the movable mechanism (35; 135) can assume at least one working position in which the adjusting system (34; 134) applies a down-pressure to the working element (30); and
- an adjusting state, in which the movable mechanism (35; 135) is movable relative to the reference member (36; 136) about a lower axis (60),
***characterized in that***
the movable mechanism (35; 135) comprises a second axis (62) different from the first axis (61),
the movable mechanism (35; 135) allows an intermediate state in which the lever is rotatable about the second axis (62).

2. Working element according to the preceding claim, wherein, in the intermediate state, when the first axis (61) is on a first side (C1) of a plane (P2) passing through the lower axis (60) and through the second axis (62), the resilient member (38; 138) stresses the lever (37; 137) toward the reference member (36; 136).

3. Working element according to one of the preceding claims, wherein, in the intermediate state, when the first axis (61) is on a second side (C2) of a plane (P2) passing through the lower axis (60) and the second axis (62), the resilient member (38; 138) stresses the lever (37; 137) toward the adjusting state.

4. Working element according to one of the preceding claims, wherein, in the adjusting state, the resilient member (38; 138) has a constant adjusting length (D1; D'1) and is rotatable about the lower axis (60).

5. Working element according to the preceding claim, wherein a support (42, 43; 142, 143) of the resilient member (38; 138) is provided with a stop adjusting member (45; 145), the adjusting length (D1; D'1) of the resilient member (38; 138) being determined by the position of the stop adjusting member (45; 145).

6. Working element according to the preceding claim, wherein the support (42, 43) and a pivot (47, 51) each include a bore (46, 48), the position of the stop adjusting member (45) being adjustable by inserting a corresponding tool into the bores when the latter are aligned.

7. Working element according to one of the preceding claims, wherein the resilient member (38) includes a helical traction spring (44).

8. Working element according to one of claims 1 to 4, wherein the resilient member (38) includes a helical traction spring (44) with a solid length in the adjusting state of the movable mechanism (35).

9. Working element according to one of claims 1 to 8, wherein the reference member (36) is a rack comprising indentations (57, 58) oriented upward, i.e., away from the lower arm (18).

10. Working element according to one of claims 1 to 6, wherein the resilient member (138) includes at least one compression spring (144).

11. Working element according to one of claims 1 to 6 and 10, wherein the reference member (136) is a rack comprising indentations (157) oriented downward, i.e., toward the lower arm (18).

12. Working element according to claim 5, wherein the stop adjusting member (145) is a hex head screw, and wherein a wall of a support (143) forms a stop for the head (146) of the hex head screw.

13. Working element according to one of the preceding claims, in the engaged state the movable mechanism (35; 135) can also assume a neutral position in which the movable mechanism (35; 135) is held against the reference member (36; 136) by the resilient element (38; 138) without the system for adjusting the down-pressure (34; 134) applying a down-pressure to the working element (30).

14. Agricultural machine comprising a working element according to one of claims 1 to 13.
